# EUROPEAN PATENT APPLICATION

(11) **EP 0 630 118 A1**
(43) Date of publication of application: **21.12.1994**
(21) Application number: 94304009.7
(22) Date of filing: 03.06.1994
(51) Int. Cl.: H04B 1/40, H04L 12/28

(54) **Radio local area network**

(30) Priority: 18.06.1993 GB 9312589
(71) Applicant: PLESSEY SEMICONDUCTORS LIMITED, Swindon, Wiltshire SN2 2QW (GB)
(72) Inventor: Minett, Peter John, Swindon, Wiltshire SN5 9NH (GB)
(74) Representative: Hoste, Colin Francis

(57) **Abstract**

In a radio local area network in which the output power for any transmitter/receiver station is limited to a specified maximum equivalent isotropically radiated power (EIRP), two or more of the transmitter/receiver stations may have separate transmitter and receiver antennae, the receiver antennae being directional high gain antennae such that the range at which two such stations can communicate is correspondingly greater than for stations using omnidirectional receive antennae.

## Description

Radio, or wireless, local area networks are being developed for linking together small computers within a building or other defined small area, or linking small computers to a central facility, without the need for dedicated wiring.

The regulations governing the radio frequencies to be used for such networks limit the maximum transmitted power density to avoid interference between adjacent networks. For example, for the frequency bid from 2.4 to 2.5 GHz it is proposed to limit the maximum output power to 100mW equivalent isotropically radiated power (EIRP). In a typical office environment this may result in a "worst-case" reliable range of 50 metres.

According to one aspect of the present invention in a radio local area network system at least two transmitter/receiver arrangements each have separate transmitter and receiver antennae, the respective receiver antennae being high gain antennae whereby the range between said two transmitter/receiver arrangements may be increased.

The receiver antennae may be dish antennae.

According to another aspect of the present invention a transmitter/receiver arrangement for a radio local area network system has separate transmitter and receiver antennae, the receiver antenna being a high gain directional antenna.

The receiver antenna may be a dish antenna.

According to another aspect of the present invention a long range link for a radio local area network comprises two transmitter/receiver arrangements each having separate transmitter and receiver antennae, the respective receiver antennae being high gain directional antennae capable of being aimed towards the transmitter antennae of the respective opposite transmitter/receiver arrangements.

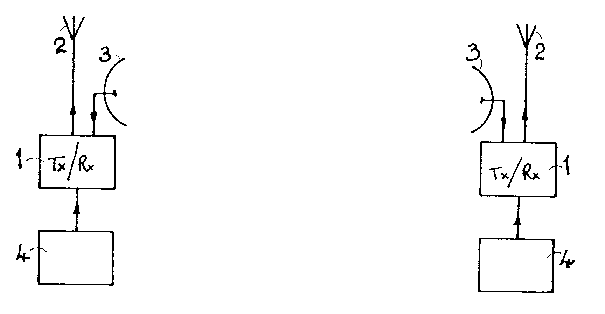

Part of a radio local area network in accordance with the present invention is illustrated in the accompanying drawing, which shows schematically a pair of transmitter/receiver arrangements each having a directional receiver antenna.

Referring to the drawing each of a pair of transmitter/receivers 1 has an omnidirectional transmitter antenna 2 and a directional receiver antenna 3, which may for example be a dish antenna as indicated. The use of such directional antennae enables the establishment of a long-range link in what is essentially a system providing short range links, the two directional receiver antennae 3 being able to pick up usable signals at greater range than omnidirectional antennae. For example, if a dish antenna of 10cm radius is provided for the receivers at either end of a link a 25-fold increase in range is possible, giving a range of more than 1Km. Higher gain receiver antennae, of any type, will allow a proportionate increase in range without increasing the EIRP. Such links may be used, for example, to connect remote individual users into an existing network.

As well as providing digital data links between sources 4, such as computers, the present arrangement may be used to communicate other digital data, analogue data such as video or compressed video, or high quality audio data. Applications may include links to remote tills in large stores, remote surveillance closed circuit cameras or remote alarms.

Alternatively the present arrangement may be used in conjunction with networks utilising lower than the maximum permitted radiated power levels such that cell sizes or the spacing between cells may be reduced without increasing the risk of interference between cells.

The transmitter/receivers 1 may be provided with switch means (not shown) whereby signals may be received selectively either by way of their directional antennae 3 or by way of their omnidirectional antennae 2.

## Claims

1. A radio local area network system wherein at least two transmitter/receiver arrangements each have separate transmitter and receiver antennae, the respective receiver antennae being high gain antennae whereby the range between said two transmitter/receiver arrangements may be increased.

2. A radio local area network system in accordance with Claim 1 wherein the receiver antennae are dish antennae.

3. A transmitter/receiver arrangement for a radio local area network system having separate transmitter and receiver antennae, the receiver antenna being a high gain directional antenna.

4. A transmitter/receiver arrangement in accordance with Claim 3 wherein the receiver antenna is a dish antenna.

5. A long range link for a radio local area network comprising two transmitter/receiver arrangements each having separate transmitter and receiver antennae, the respective receiver antennae being high gain directional antennae capable of being aimed towards the transmitter antennae of the respective opposite transmitter/receiver arrangements.
